# EUROPÄISCHE PATENTANMELDUNG

(11) **EP 3 098 021 A1**
(43) Veröffentlichungstag der Anmeldung: **30.11.2016**
(21) Anmeldenummer: 16171657.6
(22) Anmeldetag: 27.05.2016
(51) Int. Cl.: B23K 35/36, B23K 35/02

(54) **FLUSSMITTELPASTE ZUM WEICHLÖTEN VON ALUMINIUM**

(30) Priorität: 29.05.2015 DE 102015108482
(71) Anmelder: ELSOLD GmbH & Co. KG, 38871 Ilsenburg (DE)
(72) Erfinder: KOPP, Nils, 38667 Bad Harzburg (DE)
(74) Vertreter: Ahrens, Gabriele

(57) **Zusammenfassung**

Die vorliegende Erfindung betrifft eine Flussmittelpaste zum Weichlöten von Aluminium mit einem Flussmittel auf Basis von Zinnchlorid.

## Beschreibung

Die vorliegende Erfindung betrifft eine Flussmittelpaste zum Weichlöten von Aluminium.

Es ist bekannt, Bauteile aus Aluminium oder Aluminiumlegierungen miteinander oder mit Bauteilen aus geeigneten anderen metallischen Werkstoffen durch Löten zu verbinden.
Das Lot wird aufgeschmolzen, verteilt sich im flüssigen Zustand über die Oberfläche und diffundiert in die Oberflächenbereiche der metallischen Bauteile. Es bildet sich eine intermetallische Zwischenschicht, die die Bauteile verbindet. Dabei werden Lötvorgänge bei Temperaturen bis circa 450°C als Weichlöten bezeichnet, wobei entsprechend Lote eingesetzt werden, die unterhalb dieser Temperatur schmelzen. Oberhalb von 450°C findet Hartlöten statt.

Wesentliche Voraussetzung für eine feste und dauerhafte Lötverbindung ist eine gute Benetzung der Oberfläche durch das Lot. Für eine gute Benetzbarkeit müssen die Oberflächen metallisch blank, das heißt sie müssen insbesondere frei von Oxidschichten sein.

Das Löten von Aluminium beziehungsweise Aluminiumlegierungen ist besonders schwierig, da Aluminium und dessen Legierungen eine chemisch äußerst stabile, kompakte Oxidschicht aufweisen, die entsprechend schwer zu entfernen ist.

Flussmittel haben die Aufgabe Oxidschichten zu entfernen und zudem eine Neubildung während des Lötvorganges zu verhindern.

Das Flussmittel wird vor dem Löten oder in Verbindung mit dem Lot auf die Lötflächen aufgetragen. Durch die Erwärmung beim Löten schmilzt das Flussmittel und beseitigt die Oxidschicht durch chemische Reaktion. Wesentlich ist, dass die Schmelztemperatur des Flussmittels unter der des verwendeten Lotes liegt, damit die Lösung der Oxide bewirkt wird, bevor das Lot schmilzt. Das geschmolzene flüssige Flussmittel sollte eine gute Fließfähigkeit und Benetzbarkeit aufweisen.

Flussmittel haben daher je nach Art des Werkstoffes der zu verlötenden Teile und der Schmelztemperatur des verwendeten Lotes eine unterschiedliche Zusammensetzung. Sie können fest, flüssig oder pastös sein.

Geeignete Flussmittel zum Weichlöten von Aluminium sind nach DIN EN 29454 grundsätzlich in drei Klassen eingeteilt.:
- F-LW-1: Lotbildende Zinn- und/oder Zinkchloride,
- F-LW-2: Rein organische Verbindungen, zum Beispiel Amine, und
- F-LW-3: Organische Halogenverbindungen.

Dabei stehen die Buchstaben F für Flussmittel, L für Leichtmetall und W für Weichlöten. Von den genannten Klassen ist die Flussmittelklasse F-LW-1 die reaktivste Klasse.

Nach J. D. Down "Solders, Fluxes, and Techniques for Soldering Aluminium", Symposium on Solder, ASTM, 1957 besitzen von den genannten drei Flussmittelklassen die Zink- und Zinnchloride zudem die besten Löteigenschaften, wobei für Zinnchlorid gegenüber Zinkchlorid ein besseres Löt- und Benetzungsergebnis bei niedrigeren Löttemperaturen beobachtet werden.

Zur zusätzlichen Aktivierung können den Flussmitteln aller drei Klassen Fluoride oder Fluorverbindungen zugesetzt werden.

Ein im Hinblick auf Reaktionstemperatur und erforderlicher Lötzeit optimiertes Flussmittel der reaktivsten Klasse F-LW-1 ist in US 3,988,175 beschrieben. Es besteht aus 10 bis 14 Gewichtsteilen Zinnchlorid (84 bis 98 Gewichtsprozent), 0,25 bis 1,5 Gewichtsteilen Ammoniumchlorid (1,7 bis 13,0 Gewichtsprozent) sowie 0,05 bis 0,3 Gewichtsteilen Natriumfluorid (0,3 bis 2,8 Gewichtsprozent) und ist als Pulver oder Flüssigkeit in Gemisch mit einem Alkohol applizierbar. Die Schmelztemperatur der hier beschriebenen Flussmittel liegt jedoch deutlich oberhalb von 150°C. Bei diesen hohen Temperaturen kann insbesondere bei schneller Aufheizung die Benetzung und Fließfähigkeit beeinträchtigt sein. Zudem ist anzunehmen, dass der Alkohol vollständig wasserfrei sein muss und das Gemisch unmittelbar vor dem Auftrag herzustellen ist. Damit ist keine Lagerfähigkeit gegeben.

Die für das Weichlöten von Aluminium bekannten Pastensysteme sind den Flussmittelklassen F-LW-2 und F-LW-3 zuzuordnen.

Flussmittelpasten der aktivsten Klasse F-LW-1 sind nicht bekannt. Pasten haben gegenüber von festen oder flüssigen Flussmitteln den Vorteil, dass sie auf Grund ihrer hohen Viskosität und Klebrigkeit einfacher zu applizieren sind, auf dem Applikationsort verbleiben und nicht abtropfen.

Bei dem Versuch eine Paste herzustellen, hat sich gezeigt, dass die hochreaktiven Substanzen der Klasse F-LW-1 mit zahlreichen bei der Pastenherstellung zur Einstellung der Viskosität eingesetzten typischen Lösungsmitteln wie Wasser, Ethanol, Isopropanol und Glycol in unerwünschter Weise reagieren, wodurch ihre Reaktivität als Flussmittel zur Ablösung der Oxidschichten verloren geht.

Es war daher Aufgabe der vorliegenden Erfindung eine Flussmittelpaste auf Basis der reaktivsten Flussmittelklasse F-LW-1 bereitzustellen, wobei die erfindungsgemäße Flussmittelpaste eine Schmelztemperatur insbesondere der aktiven Bestandteile aufweist, die unter 150°C liegt.
Damit ist ein schnelles Aufheizen unter schnellem Benetzen der Lötfläche möglich.

Erfindungsgemäß wird diese Aufgabe gelöst durch eine Flussmittelpaste für das Weichlöten von Aluminium und Aluminiumlegierungen, wobei die Flussmittelpaste von 10 bis 90 Gewichtsprozent eines Flussmittels auf Halogenidbasis und 90 bis 10 Gewichtsprozent eines Pastengrundstoffes aufweist, wobei das Flussmittel eine Zusammensetzung (in Gewichtsprozent bezogen auf die Flussmittelzusammensetzung) aufweist von:
- SnCl₂ 82,5 bis 95,4%,
- NH₄Cl 1,7 bis 13% und
- NaF 2,9 bis 4,5%.

Gemäß einer bevorzugten Ausführungsform ist der Anteil an NaF mehr als 2,9 Gew. % und besonders bevorzugt mindestens 3,25 Gew. %.

Gemäß einer weiteren Ausführungsform können dem Flussmittel mindestens 4 bis 12 Gewichtsprozent ZnCl₂ zugesetzt werden, wobei das Verhältnis des Dreistoffsystems SnCl₂-NH₄Cl-NaF unverändert bleibt.

Flussmittel der erfindungsgemäßen Dreistoff- beziehungsweise Vierstoffsysteme weisen eine Schmelztemperatur von unter 150°C und vorzugsweise unter 130°C auf.

So zeigt ein erfindungsgemäß bevorzugtes Flussmittel mit 86,75% SnCl₂, 10% NH₄Cl und 3,25% NaF eine Solidustemperatur von 146°C und bei Zusatz von 8% ZnCl₂ 128°C.

Ein konkretes Beispiel für eine erfindungsgemäß bevorzugte Flussmittelpaste umfasst Zinnchlorid 52,0%, Ammoniumchlorid 5,3%, Natriumfluorid 2,2%, Zinkchlorid 5,3% und Vaseline 35,2%.

Als Pastengrundstoff wird ein Material verwendet, das inert gegen das Flussmittel ist. Ein Beispiel für einen geeigneten Pastengrundstoff ist ein halbfestes Paraffin wie zum Beispiel Vaseline.
Es versteht sich jedoch, dass im Prinzip jeder Pastengrundstoff eingesetzt werden kann, wie er für die Herstellung von Flussmittelpasten für das Weichlöten verwendet wird, soweit der Grundstoff inert gegenüber dem erfindungsgemäßen Flussmittelsystem ist.
Beispiele sind weitere von Vaseline verschiedene Paraffine, Wachse und andere Lipogele sowie Fette.

Die erfindungsgemäße Flussmittelpaste auf Basis von Flussmitteln der reaktivsten Flussmittelklasse F-LW-1 ist äußerst effizient bei der Ablösung von chemisch sehr beständigen Oxidschichten, wie sie zum Beispiel von Aluminium ausgebildet werden.
Es versteht sich, dass die erfindungsgemäße Flussmittelpaste nicht auf das Weichlöten von Aluminium und dessen Legierungen beschränkt ist, sondern gleichermaßen für das Löten von anderen Metallen und Metalllegierungen eingesetzt werden kann, insbesondere von Metallen und Metalllegierungen, die ähnlich Aluminium chemisch sehr beständige Oxidschichten ausbilden, wie zum Beispiel Chrom, Titan oder rost- und säurebeständige Stähle.

Darüber hinaus weist die erfindungsgemäße Flussmittelpaste beziehungsweise die darin eingesetzte Flussmittelzusammensetzung einen vergleichsweise niedrigen Schmelzpunkt von unter 150°C auf.

## Patentansprüche

1. Flussmittelpaste für das Weichlöten von Aluminium und Aluminiumlegierungen, enthaltend 10 bis 90 Gewichtsprozent Flussmittel auf Halogenidbasis und 90 bis 10 Gewichtsprozent eines Pastengrundstoffes,
**wobei** das Flussmittel eine Zusammensetzung (in Gewichtsprozent bezogen auf die Flussmittelzusammensetzung) aufweist von:
SnCl₂ 82,5 bis 95,4%,
NH₄Cl 1,7 bis 13% und
NaF 2,9 bis 4,5%.

2. Flussmittelpaste nach Anspruch 1,
**wobei** das Flussmittel 4 bis 12 Gewichtsprozent ZnCl₂ (bezogen auf die Flussmittelzusammensetzung) enthält.

3. Flussmittelpaste nach einem der vorhergehenden Ansprüche,
**wobei** der Pastengrundstoff ein halbfestes Paraffin ist.

4. Flussmittelpaste nach Anspruch 3,
**wobei** das halbfeste Paraffin Vaseline ist.

5. Flussmittelpaste nach einem der vorhergehenden Ansprüche,
**wobei** die Flussmittelpaste eine Schmelztemperatur von unter 150°C aufweist.

6. Verwendung einer Flussmittelpaste nach einem der Ansprüche 1 bis 5 für das Weichlöten von Aluminium und Aluminiumlegierungen.

7. Verwendung nach Anspruch 6,
**wobei** die Flussmittelpaste eine Schmelztemperatur von unter 150°C aufweist.
